# EUROPÄISCHE PATENTSCHRIFT

(11) **EP 2 048 366 B1**
(45) Veröffentlichungstag und Bekanntmachung des Hinweises auf die Patenterteilung: **16.03.2011**
(21) Anmeldenummer: 07019737.1
(22) Anmeldetag: 09.10.2007
(51) Int. Cl.: F04D 29/10, F04D 29/12, F01D 11/02, F01D 11/00, F16J 15/32, F16J 15/44

(54) **Turbomaschine mit radial rückfederndem Labyrinthdichtungssegment**
Turbomachine with radially biasing labyrinth seal segment
Turbomachine avec segment de joint à labyrinthe ayant un rappel élastique radial

(43) Veröffentlichungstag der Anmeldung: 15.04.2009
(73) Patentinhaber: SIEMENS AKTIENGESELLSCHAFT, 80333 München (DE)
(72) Erfinder: Naß, Dieter, 47447 Moers (DE); Zacharias, Wolfgang, 47198 Duisburg (DE)

(56) Entgegenhaltungen:
- WO-A-2004/053365
- FR-A- 2 675 560
- US-A- 3 019 035
- US-A- 5 181 308
- US-B1- 7 216 871

## Beschreibung

Die vorliegende Erfindung betrifft eine Turbomaschine, insbesondere einen Kompressor, eine Dampfturbine oder eine Gasturbine, mit einem feststehenden Gehäuse, mit einem darin um eine Drehachse drehbar gelagerten Läufer, und mit mindestens einem Einsatz, der den Läufer zumindest teilweise umgibt, der zur Drehachse radial verschieblich im Gehäuse geführt ist, der elastisch in Richtung der Drehachse vorgespannt ist, und der an seiner dem Läufer zugewandten Seite mit Dichtstreifen versehen ist, die mit der Peripherie des Läufers eine Labyrinthdichtung bilden, wobei das Material des Einsatzes ein Federorgan ausbildet, welches integraler Bestandteil des Einsatzes ist und diesen elastisch in Richtung der Drehachse vorspannt.

Turbomaschinen wie Turbinen oder Kompressoren umfassen stets ein feststehendes Gehäuse, in welchem ein Läufer um die Drehachse rotiert. Läufer und Gehäuse sind beschaufelt, die Schaufeln verdichten das Arbeitsmedium bzw. wandeln dessen Strömungsenergie in Bewegungsenergie des Läufers um. Die Beschaufelung muss an ihrer Peripherie zum Gehäuse bzw. Läufer abgedichtet werden, damit das Arbeitsmedium nicht an den einzelnen Stufen vorbeiströmt. Die Güte der Abdichtung beeinflusst erheblich den Wirkungsgrad der Turbomaschine.

Die Dichtstellen werden in der Regel mit Hilfe von Labyrinthdichtungen ausgeführt, die eine Vielzahl von Dichtstreifen umfassen, die sehr dicht an das korrespondierende Gegenteil angenähert sind und mit ihm einen geringen Dichtspalt ausbilden. Der Dichtspalt bewegt sich von einem Bereich von wenigen Zehnteln von Millimetern bis zu wenigen Millimetern, abhängig von der Größe der Maschine und ihrem thermischen Verhalten.

Im Normalbetrieb sollte der Dichtspalt besonders gering sein, um die Leckageverluste gering und damit den Wirkungsgrad der Maschine hoch zu halten. Dieser enge Spalt kann jedoch nicht in allen Betriebszuständen beibehalten werden. So gerät der Läufer beim An- und Abfahren der Turbomaschine in Schwingungen, deren radiale Amplitude den Dichtspalt übersteigen kann. Die Folge ist ein Anstreifen der Schaufeln an den Dichtstreifen. Eine noch gravierende radiale Auslenkung kann ein magnetisch gelagerter Läufer erfahren: Die Magnetlagerung erlaubt zwar im gewöhnlichen Betrieb ein sehr geringes Lagerspiel, jedoch sind zu ihr Wälzlager redundant vorzusehen. Die Wälzlager übernehmen den Läufer, falls die Magnetlager aufgrund eines Stromausfalls versagen. Die konventionellen Wälzlager sind prinzipbedingt größer toleriert, so dass der Läufer bei der Übergabe von dem Magnet- auf die Wälzlagerung eine radiale Auslenkung erfährt, die den Dichtspalt um etwa das 3- bis 5-fache übersteigt. Diese Überhöhung ist bei der Auslegung der Dichtung stets zu berücksichtigen, da erwartungsgemäß jede magnetgelagerte Turbomaschine über ihre Betriebszeit zumindest einmal auf wälzlagern läuft.

Um eine Beschädigung der Dichtstreifen bei starker Auslenkung des Läufers zu vermeiden, ist es bekannt, dieses elastisch in Richtung der Drehachse vorzuspannen. Dies geschieht beispielsweise dadurch, dass elastomere Dichtstreifen verwendet werden, die dem auslenkendem Läufer ausweichen und sich danach zurück biegen. Alternativ werden die Dichtstreifen auf einem radial im Gehäuse verschieblich geführten, starren Gehäuseeinsatz angeordnet, welcher elastisch in Richtung des Läufers vorgespannt ist. Letztere Lösung wird insbesondere bei der Verwendung von metallischen Dichtstreifen gewählt, deren Werkstoff nicht die erforderliche Elastizität aufbringt. Die elastische Vorspannung erfolgt somit über eine separate Feder, die zwischen Gehäuse und Einsatz bespannt wird.

Aus der internationalen Patentanmeldung WO 2004/053365 A1 ist bereits eine Dichtungsanordnung bekannt, bei der ein eine Labyrinthdichtung tragender Einsatz mittels einer Feder in Richtung des Rotors vorgespannt ist. Die Druckschrift FR 2 675 560 A1 zeigt ein Dichtelement, welches in sich federnd ausgebildet ist. Das US-Patent US 7,216,871 B1 offenbart einen federnden Einsatz, der Träger einer Labyrinthdichtung sein kann, welcher integral ausgebildete Federorgane umfasst, wobei die Träger der Labyrinthdichtung hinsichtlich ihrer Koaxialität zur Rotoroberfläche nur unsicher positioniert sind.

Nachteilig bei den beschriebenen Lösungen ist die damit einhergehende Einschränkung der Werkstoffwahl. So lassen sich elastomere Dichtstreifen weder bei besonders hohen Drücken einsetzen, noch eignen sie sich zum Abdichten aggressiver Arbeitsmedien wie beispielsweise Schwefelwasserstoff. Hier sind zwingend Dichtstreifen aus hochlegiertem Stahl erforderlich. Das Federelement besteht dagegen aus Federstahl, welcher hohen Temperaturen und aggressiven Medien nicht stand hält und deswegen entsprechend abgedichtet werden muss. Dadurch steigt der konstruktive Aufwand der Dichtung.
Im Hinblick auf diesen Stand der Technik liegt der vorliegenden Erfindung die Aufgabe zugrunde, eine Turbomaschine der eingangs genannten Art so weiter zu bilden, dass ihre Labyrinthdichtung im Normalbetrieb einen äußerst geringen Dichtspalt einhält und im Störfall eine starke radiale Auslenkung des Läufers unbeschadet übersteht. Das Dichtungssystem soll zudem resistent gegen aggressive Medien, Korrosion sowie hohe Temperaturen sein und eine einfache Montage erlauben.

Gelöst werden diese Aufgaben durch eine eingangs definierte Turbomaschine mit den Merkmalen des Anspruchs 1.

Eine der Erfindung zugrunde liegende Idee besteht somit darin, zur Herstellung der elastischen Vorspannung nicht mehr ein separates, werkstofftremdes Federelement vorzusehen, sondern die Federwirkung in dem Material des Einsatzes zu realisieren. Das Federorgan wird somit integraler Bestandteil des Einsatzes aus demselben Werkstoff.

Vorteilhaft an dieser Lösung ist, dass fortan keine Probleme mehr bei der Werkstoffauswahl der Feder bestehen, da hierzu der bewährte Werkstoff des Einsatzes verwendet wird. Darüber hinaus wird die Montage erleichtert, da weniger Teile zu montieren sind und eine Abdichtung der Feder entfällt.

Vorteilhaft ist es insbesondere, aus dem Material des Einsatzes nicht nur das Federorgan, sondern auch die Dichtstreifen auszubilden, so dass diese ebenfalls integraler Bestandteil des Einsatzes werden. Dadurch wird die Konstruktion noch einmal vereinfacht.

Grundsätzlich sind alle Materialien für das integrierte Bauteil denkbar, z. B. ein Elastomer oder ein metallischer Werkstoff. Letzterer ist jedoch bevorzugt, hierbei insbesondere Aluminium oder ein hochlegierter Stahl.

Das Federorgan wird so gestaltet, dass es mindestens ein Federbein umfasst, welches sich tangential zum Einsatz erstreckt, mit seinem proximalen Ende innerhalb eines Wurzelbereichs an den Einsatz angebunden ist und mit seinem distalen Ende an dem Gehäuse anliegt. Ein derartiges Federbein erlaubt nämlich eine besonders einfache und sichere Definition seiner Federsteifigkeit über Querschnitt und Länge des Beines. Damit kann die Eigenfrequenz des Einsatzes so ausgelegt werden, dass diese von der Eigenfrequenz des Läufers abweicht. Damit wird verhindert, dass sich Schwingungen beider Systeme ungünstig überlagern.

Um Kerbspannungen im Wurzelbereich zu vermeiden, sollte der innenseitige Übergang des proximalen Endes des Federbeins in den Wurzelbereich mit einer sich axial erstreckenden Kehle versehen werden. Der Materialquerschnitt des Federbeins im Bereich der Kehle ist auch für die Einstellung der Federsteifigkeit des Einsatzes nutzbar: Durch den Durchmesser der axial verlaufenden Kehle im Wurzelbereich kann die Federsteifigkeit des Federorgans zusätzlich beeinflusst werden, mit steigendem Bohrungsdurchmesser nimmt die strukturelle Schwächung des Wurzelbereiches zu und mit ihm die Elastizität des Federorgans. Mit Hilfe dieser Gestaltungsmerkmale lässt sich die Federsteifigkeit selbst bei Verwendung von Werkstoffen mit hohem Elastizitätsmodul genau einstellen.

Das Federorgan ist mit zwei derartigen Federbeinen ausgestattet, die ausgehend von einem gemeinsamen Wurzelbereich sich von einander forterstrecken. Die Verdoppelung der Feder verbessert die Positionierung des Einsatzes im Gehäuses und dessen Führung. Zu diesem Zwecke kann der Wurzelbereich auch mit einer radial verlaufenden Bohrung zur Aufnahme eines Führungsstiftes versehen werden.

Eine bevorzugte Weiterbildung der Erfindung sieht vor, dass der Einsatz mit einer Aufstandsfläche versehen wird, die sich auf der Hochdruckseite der Labyrinthdichtung im Wesentlichen vom Läufer abgewandt erstreckt und für das Arbeitsmedium der Turbomaschine zugänglich ist. Der auf der Aufstandsfläche lastende Druck des Arbeitsmediums bildet dann eine resultierende Kraft, die den Einsatz gegen den Läufer presst. Diese Kraft braucht somit von der elastischen Vorspannung nicht mehr aufgebracht zu werden, wodurch die Belastung des Federorgans sinkt.

Bei dieser Anordnung wird vorzugsweise diametral zur Aufstandsfläche ein Anschlag am Gehäuse angeordnet, auf dem der Einsatz anliegt. Der gehäusefeste Anschlag definiert den minimalen Dichtungsspalt, der im Normalbetrieb eingehalten wird. Ausgehend von diesem ist der Einsatz radial beweglich, und weicht dem ausschlagenden Läufer zusammen mit den Dichtstreifen aus.

Vorzugsweise wird die Dichtung an einer Stufe aus einer Mehrzahl von segmentartigen Einsätzen gebildet, die sich um den Läufer herum erstrecken. Pro Dichtstelle werden vorzugsweise zwei bis vier Segmente vorgesehen, so dass sich jeder Einsatz entsprechend über 180, 120 oder 90 Grad erstreckt.

Der beschriebene Einsatz mit Federorgan und gegebenenfalls integriertem Dichtstreifen ist ein wesentliches Element der erfindungsgemäßen Turbomaschine.

Selbstverständlich ist auch die kinematische Umkehr der erfindungemäßen Dichtungsanordnung möglich: Demnach wird der Einsatz im Läufer gelagert und mittels des Federorgans radial nach außen in Richtung des Gehäuses vorgespannt. Die mit dem Einsatz rotierenden Dichtstreifen bilden dann mit dem stehenden Innenumfang des Gehäuses entsprechend die Labyrinthdichtung.

Die Erfindung soll nun anhand von Ausführungsbeispielen näher erläutert werden. Hierfür zeigen:
- Fig. 1:: Einsatz im Längsschnitt;
- Fig. 2:: Einsatz im Gehäuse geführt, im Längsschnitt;
- Fig. 3:: zwei Einsatzsegmente in Axialansicht.

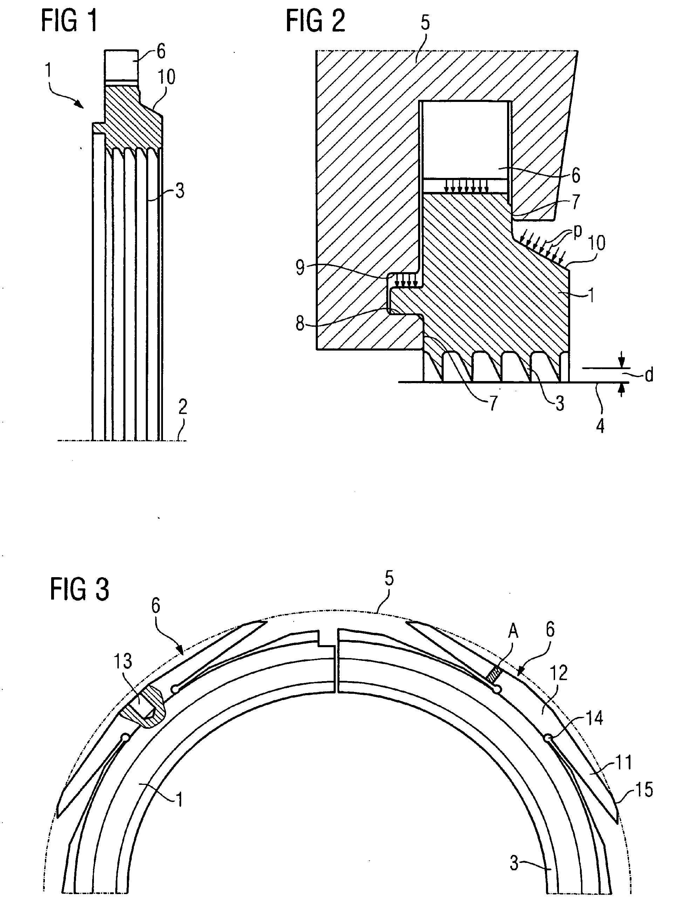

Figur 1 zeigt einen Schnitt durch den Einsatz 1 einer erfindungsgemäßen Turbomaschine. In diesem Beispiel erstreckt sich der Einsatz 1 ringsegmentartig über einen Winkel von 90°, so dass insgesamt vier ringsegmentartige Einsätze 1 den hier nicht dargestellten Läufer der Turbomaschine umgeben. Die Einsätze 1 sind somit koaxial zur Drehachse 2 der Turbomaschine angeordnet. An seiner dem Läufer zugewandten Innenseite ist der Einsatz 1 mit fünf Dichtstreifen 3 versehen, die mit der Figur 2 angedeuteten Peripherie 4 des Läufers eine Labyrinthdichtung ausbilden. Ein zwischen den Dichtstreifen 3 und der Peripherie 4 verbleibende Dichtspalt ist nicht dargestellt.

An seiner dem Gehäuse 5 zugewandten Außenseite bildet das Material des Einsatzes 1 ein Federorgan 6 aus, welches integraler Bestandteil des Einsatzes 1 ist und diesen radial elastisch in Richtung der Drehachse 2 vorspannt. Die Gestalt des Federorgans 6 wird später anhand der Figur 3 erläutert werden. Federorgan 6 und Dichtstreifen 3 sind integraler Bestandteil des Einsatzes 1, es handelt sich somit um ein einziges, fügestellenloses Bauteil aus einem einzigen, zusammenhängenden Werkstoff, nämlich eine Aluminiumlegierung oder einem hochlegierten Stahl. Es können auch andere Werkstoffe mit Federeigenschaften verwendet werden.

In Figur 2 ist ersichtlich, wie der Einsatz 1 in einer Ausnehmung des Gehäuses 5 radial geführt und zugleich axial fixiert ist. Die axiale Fixierung erfolgt an den Punkten 7; in Richtung der Drehachse ist der radiale Hub des Einsatzes 1 durch einen gehäusefesten Anschlag 8 begrenzt. Radial nach außen ist der Hub durch einen zweiten gehäusefesten Anschlag 9 limitiert, um das Federorgan 6 nicht zu überlasten. Die Differenz der radialen Anschläge 8 und 9 definiert einen radialen Federweg d ausgehend von der Peripherie 4. Um diesen Weg d vermag der Einsatz 1 vor dem auslenkenden Läufer zurückzuweichen.

Der Einsatz 1 ist auf der Hochdruckseite der Labyrinthdichtung (in den Figuren 1 und 2 jeweils rechts) mit einer Aufstandfläche 10 versehen, die durch eine entsprechende Ausnehmung im Gehäuse 5 für das Arbeitsmedium der Turbomaschine zugänglich ist und sich im Wesentlichen vom Läufer abgewandt erstreckt. Im Ausführungsbeispiel verläuft sie etwa diagonal und passiert den Einsatz 1 an seine dem Anschlag 8 diametral gegenüberliegenden Seite. Der auf der Aufstandsfläche 10 lastende Druck p des Arbeitsmediums erzeugt eine resultierende Kraft, welche den Einsatz gegen den Anschlag 8 und in Richtung der Peripherie 4 drückt. Diese aus dem Druck p resultierende Kraft überlagert die Vorspannkraft des Federorgans 6, so dass dieses in der Praxis nicht so gewichtig dimensioniert werden muss. Unterhalb des Federorgans 6 und zwischen den radialen Anschlägen 8, 9 ist der Einsatz 1 ebenfalls mit Mediendruck p belastet, der die Dichtstreifen 3 in Richtung der Peripherie 4 drückt.

Die Gestaltung des Federorgans 6 ist aus Figur 3 ersichtlich. Figur 3 zeigt zwei ringsegmentartige Einsätze 1, die sich zusammen über einen Winkel von 180° um die senkrecht zur Zeichenebene verlaufende Drehachse herum erstrecken.

Mittig weisen die Einsätze 1 an ihrer Außenseite jeweils ein Federorgan 6 auf. Jedes Federorgan 6 umfasst zwei Federbeine 11, die sich jeweils tangential zum Einsatz 1 erstrecken. Mit ihrem proximalen Ende entspringen sie einem gemeinsamen Wurzelbereich 12, in welchem sie an den Einsatz 1 angebunden sind. Der Wurzelbereich 12 beschreibt die Umgebung um den Berührpunkt, in dem sich die Längsachsen der Federbeine 11 als Tangenten an den Außenumfang der Einsätze 1 anschmiegen. Zur ihren distalen Enden hin erstrecken sich die Federbeine 11 voneinander fort und liegen damit in einem Berührpunkt 15 tangential am Innendurchmesser des Gehäuse 5 an. An den distalen Enden der Federbeine 11 kommt es somit zu einer Linienberührung mit dem Gehäuse 5. Ihr innenseitiger Übergang zum Wurzelbereich 12 ist jeweils mit einer axial verlaufenden Kehle 14 abgerundet, um Kerbspannungen zu vermeiden.

Die Federsteifigkeit des Federorgans 6 wird beim gegebenen Werkstoff im Wesentlichen durch Wahl des Querschnitts der Federbeine A, deren Länge und der Materialstärke im Bereich der Kehle 14 dimensioniert. Zusätzlich heranzuziehen ist gegebenenfalls auch die Schwächung des Materials, die das Federorgan 6 durch eine radial verlaufende Bohrung 13 im Wurzelbereich 12 erfährt. Die Bohrung 13 dient zur Aufnahme eines hier nicht dargestellten Führungsstiftes. Die beschriebene Gestalt der Federorgane 6 erlaubt selbst bei Verwendung hochfester Stähle eine genaue Definition der Federsteifigkeit der elastischen Vorspannung des Einsatzes 1. Die Dichtstreifen 3 können folglich vorteilhaft steif sein, damit sie der anstreifende Läufer nicht beschädigt. Insgesamt sind bei der Werkstoffwahl allein die umgebungsbedingungen maßgeblich, nicht aber die gewünschte Elastizität, da diese über die beschriebenen Gestaltparameter eingestellt wird.

Die vorliegende Erfindung wurde anhand eins Ausführungsbeispiels erläutert, bei welchem der im Gehäuse gelagerte Einsatz einschließlich der Dichtstreifen feststehend ist. Die kinematische Umkehr dieser Anordnung ist selbstverständlich auch möglich: Demnach wird der Einsatz erfingdungsgemäß im Läufer gelagert und mittels des Federorgans radial nach außen in Richtung des Gehäuses vorgespannt. Die mit dem Läufer rotierenden Dichtstreifen bilden dann anstelle der Peripherie des Läufers mit dem Innenumfang des Gehäuses die Labyrinthdichtung.

## Patentansprüche

1. Turbomaschine,
insbesondere Kompressor, Gasturbine oder Dampfturbine, mit einem feststehenden Gehäuse (5),
mit einem darin um eine Drehachse (2) drehbar gelagerten Läufer, und
mit mindestens einem Einsatz (1), der den Läufer zumindest teilweise umgibt, der zur Drehachse (2) radial verschieblich im Gehäuse (5) geführt ist, der elastisch in Richtung der Drehachse (2) vorgespannt ist, und der an seiner dem Läufer zugewandten Seite mit Dichtstreifen (3) versehen ist, die mit der Peripherie (4) des Läufers eine Labyrinthdichtung bilden,
wobei das Material des Einsatzes (1) ein Federorgan (6) ausbildet, welches integraler Bestandteil des Einsatzes (1) ist und diesen elastisch in Richtung der Drehachse (2) vorspannt,
wobei das Federorgan (6) zwei derartige Federbeine (11) umfasst,
welche sich tangential zum Einsatz (1) erstreckten, innerhalb eines Wurzelbereichs (12) mit ihrem jeweiligen proximalen Ende an den Einsatz (1) angebunden sind, **dadurch gekennzeichnet, dass** sie mit ihrem jeweiligen
distalen Ende an dem Gehäuse (5) anliegten,
und
sich ausgehend von einem gemeinsamen Wurzelbereich (12) voneinander fort erstrecken.

2. Turbomaschine nach Anspruch 1,
**dadurch gekennzeichnet, dass**
das Material des Einsatzes (1) die Dichtstreifen (3) ausbildet, sodass diese ebenfalls integraler Bestandteil des Einsatzes (1) sind.

3. Turbomaschine nach Anspruch 1 oder 2,
**dadurch gekennzeichnet, dass**
es sich bei dem Material des Einsatzes (1) um einen metallischen Werkstoff handelt.

4. Turbomaschine nach Anspruch 1,
**dadurch gekennzeichnet, dass**
das der innenseitige Übergang des proximalen Endes des Federbeins (11) in den Wurzelbereich (12) mit einer sich axial erstreckenden Kehle (14) versehen ist.

5. Turbomaschine nach einem der Ansprüche 1 bis 4,
**dadurch gekennzeichnet, dass**
der Einsatz (1) auf der Hochdruckseite der Labyrinthdichtung eine für das Arbeitsmedium der Turbomaschine zugängliche Aufstandsfläche (10) aufweist, die sich im wesentlichen vom Läufer abgewandt erstreckt.

6. Turbomaschine nach Anspruch 5,
**dadurch gekennzeichnet, dass**
der Einsatz (1) an einem diametral zur Aufstandfläche (10) angeordneten, gehäusefesten Anschlag (8) anliegt.

7. Turbomaschine nach einem der Ansprüche 1 bis 6,
**dadurch gekennzeichnet, dass**
sich eine Mehrzahl von segmentartigen Einsätzen (1) um den Läufer herum erstrecken.

## Claims

1. Turbomachine, in particular a compressor, a gas turbine or a steam turbine,
having a stationary housing (5),
having a rotor which is mounted therein such that it can rotate about a rotation axis (2), and
having at least one insert (1), which at least partially surrounds the rotor, is guided in the housing (5) such that it can move radially with respect to the rotation axis (2), is elastically prestressed in the direction of the rotation axis (2), and is provided on its side facing the rotor with sealing strips (3) which, together with the periphery (4) of the rotor, form a labyrinth seal,
wherein the material of the insert (1) forms a spring member (6) which is an integral component of the insert (1) and prestresses this elastically in the direction of the rotation axis (2),
wherein the spring member (6) has two spring legs (11) which extend tangentially with respect to the insert (1), wherein their respective approximal ends are linked to the insert (1) within a root area (12), **characterized in that** their respective distal ends rest on the housing (5), and extend away from one another, starting from a common root area (12).

2. Turbomachine according to Claim 1,
**characterized in that**
the material of the insert (1) forms the sealing strips (3) such that these are likewise an integral component of the insert (1).

3. Turbomachine according to Claim 1 or 2,
**characterized in that**
the material of the insert (1) is a metallic material.

4. Turbomachine according to Claim 1,
**characterized in that**
the internal transition between the proximal end of the spring leg (11) and the root area (12) is provided with an axially extending fillet (14).

5. Turbomachine according to one of Claims 1 to 4, **characterized in that**
the insert (1) has a contact surface (10), which is accessible to the working medium of the turbomachine and extends essentially away from the rotor, on the high-pressure side of the labyrinth seal.

6. Turbomachine according to Claim 5,
**characterized in that**
the insert (1) rests on a stop (8) which is fixed to the housing and is diametrically opposite the contact surface (10).

7. Turbomachine according to one of Claims 1 to 6,
**characterized in that**
a plurality of segment-like inserts (1) extend around the rotor.

## Revendications

1. Turbomachine,
notamment compresseur, turbine à gaz ou turbine à vapeur, comprenant un carter ( 5 ) fixe,
comprenant un rotor qui y est monté tournant autour d'un axe ( 2 ) de rotation, et
comprenant au moins un insert ( 1 ) qui entoure le rotor au moins en partie, qui est guidé dans le carter ( 5 ) à coulissement radial par rapport à l'axe ( 2 ) de rotation, qui est précontraint élastiquement dans la direction de l'axe ( 2 ) de rotation et qui est muni de bandes ( 3 ) d'étanchéité sur son côté tourné vers le rotor, bandes qui forment une étanchéité à labyrinthe avec la périphérie ( 4 ) du rotor,
dans lequel le matériau de l'insert ( 1 ) forme un organe ( 6 ) à ressort qui fait partie intégrante de l'insert ( 1 ) et qui le précontraint élastiquement dans la direction de l'axe ( 2 ) de rotation,
l'organe ( 6 ) à ressort comprenant deux jambages ( 11 ) à ressort, qui s'étendent tangentiellement à l'insert ( 1 ), qui s'appliquent à l'insert ( 1 ) par leur extrémité proximale respective dans une zone ( 12 ) de racine, **caractérisé en ce qu'**ils s'appliquent par leur extrémité distale respective au carter ( 5 ) et s'écartent l'un de l'autre à partir d'une zone ( 12 ) de racine commune.

2. Turbomachine suivant la revendication 1,
**caractérisée en ce que**
le matériau de l'insert ( 1 ) forme les bandes ( 3 ) d'étanchéité, de sorte que celles-ci font également partie intégrante de l'insert ( 1 ).

3. Turbomachine suivant la revendication 1 ou 2,
**caractérisée en ce que**
le matériau de l'insert ( 1 ) est un matériau métallique.

4. Turbomachine suivant la revendication 1,
**caractérisée en ce que**
la transition du côté intérieur de l'extrémité proximale du jambage ( 1 ) à ressort à la zone ( 12 ) de racine est pourvue d'une moulure ( 14 ) s'étendant axialement.

5. Turbomachine suivant l'une des revendications 1 à 4,
**caractérisée en ce que**
l'insert ( 1 ) a, du côté de la haute pression de l'étanchéité à labyrinthe, une surface ( 10 ) de soulèvement, qui est accessible au fluide de travail de la turbomachine et qui s'étend en s'éloignant sensiblement du rotor.

6. Turbomachine suivant la revendication 5,
**caractérisée en ce que**
l'insert s'applique à une butée ( 8 ) fixée au carter et opposée diamétralement à la surface ( 10 ) de soulèvement.

7. Turbomachine suivant l'une des revendications 1 à 6,
**caractérisée en ce que**
une pluralité d'inserts ( 1 ) de type en segments s'étendent autour du rotor.
